# EUROPEAN PATENT SPECIFICATION

(11) **EP 2 858 925 B1**
(45) Date of publication and mention of the grant of the patent: **15.03.2017**
(21) Application number: 13800165.6
(22) Date of filing: 06.06.2013
(51) Int. Cl.: B65G 53/52, B65F 5/00

(54) **METHOD FOR CONVEYING MATERIAL IN A PNEUMATIC MATERIALS HANDLING SYSTEM, CONVEYING APPARATUS AND A MATERIAL CONVEYING SYSTEM**
VERFAHREN ZUM FÖRDERN EINES MATERIALS IN EINEM PNEUMATISCHEN MATERIALFÖRDERSYSTEM SOWIE MATERIALFÖRDERVORRICHTUNG UND MATERIALFÖRDERSYSTEM
PROCÉDÉ D'ACHEMINEMENT D'UN MATÉRIAU DANS UN SYSTÈME DE TRAITEMENT DE MATÉRIAU PNEUMATIQUE, APPAREIL D'ACHEMINEMENT ET SYSTÈME D'ACHEMINEMENT DE MATÉRIAU

(30) Priority: 07.06.2012 FI 20125624
(43) Date of publication of application: 15.04.2015
(73) Proprietor: Maricap OY, 01450 Vantaa (FI)
(72) Inventor: SUNDHOLM, Göran, FI-04310 Tuusula (FI)
(74) Representative: Heinänen Oy Patent Agency
(86) International application number: PCT/FI2013/050615
(87) International publication number: WO 2013/182754

(56) References cited:
- EP-A1- 1 362 641
- DE-C1- 10 013 977
- FR-A1- 2 891 478
- JP-A- S5 255 261
- JP-A- S5 255 261
- JP-A- S54 119 765
- JP-A- 2003 284 989
- JP-A- 2003 284 989
- KR-B1- 100 661 150
- KR-B1- 100 661 150
- KR-B1- 100 980 201
- US-A- 5 875 803

## Description

### Background of the invention

The object of the invention is a method as defined in the preamble of claim 1.

The object of the invention is also a conveying apparatus as defined in the preamble of claim 15.

The invention also relates to a system according to the preamble of claim 25.

The invention relates generally to materials handling systems, such as partial-vacuum transporting systems, more particularly to the collection and conveying of wastes, such as to the conveying of household wastes.

A method for conveying material that is in the piping of a pneumatic waste conveying system and a corresponding apparatus and system according to the preambles of claims 1, 15 and 25 are known from JP54-119765. On the other hand, KR10-0980201 and KR10-0661150 show respective cleaning pigs for a pneumatic waste conveying system, comprising a passage hole through the cleaning pigs.

Systems wherein wastes are conveyed in piping by means of an air current produced by a pressure difference or suction are known in the art. In these, wastes are conveyed long distances in the piping. It is typical to these systems that a partial-vacuum apparatus is used to achieve a pressure difference, in which apparatus negative pressure is achieved in the conveying pipe with partial-vacuum generators, such as with vacuum pumps or with an ejector apparatus. A conveying pipe typically comprises at least one valve means, by opening and closing which the replacement air coming into the conveying pipe is regulated. Input points at the input end of the material are used in the systems, from which input points the material, such as wastes, is conveyed into the system. The system can also comprise refuse chutes, into which material, such as waste material, is fed and from which the material to be conveyed is conveyed into a conveying pipe by opening a discharge valve means, in which case, by means of the suction effect achieved by the aid of the negative pressure acting in the conveying pipe and also by means of the surrounding air pressure acting via the refuse chute, material such as e.g. waste material packed into bags, is conveyed from the refuse chute into the conveying pipe. Conventional solutions known in the art for collecting and conveying wastes are rather demanding in their power requirements, so that material fractions of all sizes are made to be conveyed in the conveying piping along with the transporting air. Known from publication WO2009080885 A1 is a method and an apparatus for cleaning conveying piping that can be connected into a circuit. In addition to the solution of the publication, those sections of piping in the system that cannot be connected into a circuit must also be cleaned. JP S54119765 A discloses an in-pipe travelling body which can travel through a pipe to clean the interior of the pipe.

The aim of the present invention is to achieve an entirely new type of solution for conveying material in the conveying piping of a pneumatic pipe transport system for wastes, by means of which solution the drawbacks of prior art solutions are avoided. Another aim of the invention is to achieve a solution applicable to the conveying of the material of the conveying pipes of partial-vacuum conveying systems for wastes, by means of which solution the conveying event can be enhanced. Yet another aim of the invention is to achieve a solution that is suited also to cleaning the conveying piping, in addition to the conveying of material, more particularly also to cleaning the branching pipe sections of the conveying piping.

### Brief description of the invention

The invention is based on a concept wherein a conveying means arranged in a conveying pipe section for conveying the material in the conveying pipe section is moved in the conveying pipe by the aid of suction, blowing and/or a pressure difference in at least a first direction, and the distance of movement is limited or guided with transmission means connected to the conveying means, such as with a wire means, cable means or line means connected to a reel.

The method according to the invention is mainly characterized by what is stated in the characterization part of claim 1.

The method according to the invention is also characterized by what is stated in claims 2 - 14.

The conveying apparatus according to the invention is mainly characterized by what is stated in the characterization part of claim 15.

The apparatus according to the invention is also characterized by what is stated in claims 16 - 24.

The system according to the invention is characterized by what is stated in claim 25.

The system according to the invention is also characterized by what is stated in claims 26 - 36.

The solution according to the invention has a number of important advantages. By arranging a duct in the conveying means from a first side to a second side, the passage of a transporting air current or of replacement air through the duct of the conveying means is achieved. In this case the air flow transports in the conveying direction some of the waste material, e.g. large and medium-sized wastes, in front of the conveying means. The remaining part of the material, typically small waste materials, displaces in the conveying pipe conveyed by the conveying means. This arrangement has the advantage, compared to a conventional pneumatic pipe transport system for material, that the transporting air flow of the pneumatic wastes conveying system does not need to be dimensioned for conveying small material fractions by the aid of just a transporting air flow. In this case a significant power saving can be achieved. With the solution according to the invention the conveying means returns back to its starting location. By using a transmission means, such as a wire, a line, a cable or corresponding, said transmission means to be arranged on a reel and connected to the conveying means, an effective and operationally reliable solution is achieved for cleaning pipe sections and for conveying material from the pipe section to be treated. When moving the conveying means in a first direction mainly by the aid of suction, blowing and/or a pressure difference, the conveying means is kept connected to the transmission means, in which case the distance of travel of the conveying means in the piping can, if necessary, be limited. The movement speed of the conveying means can, if necessary, be braked with the transmission means. By using a brake device, the winding out of the transmission means can be braked. By the aid of the transmission means the movement distance of the conveying means can therefore be limited and a return movement of the conveying means can be achieved, partly or wholly, in the second direction, preferably back to the starting position. With the transmission means the movement of the conveying means can also be guided to travel in the desired direction, e.g. in a Y-branch of the piping. By additionally using a pump device connected to blow or to suck in a pipe section, the movement of the conveying means can be boosted. The conveying means can consequently be effectively moved in a first direction, e.g. using the suction of a partial-vacuum generator, and back with blowing and can alternatively be pulled back with the transmission means alone or in addition to the blowing. By connecting a number of devices according to the invention in the conveying piping of a material conveying system, the material can be conveyed towards a separating device in a desired, more particularly in a programmed, sequence. The conveying means can be used as a shut-off means in the conveying piping. By using a conveying means in which, for its part, are replacement air ducts, replacement air can be conducted into the conveying piping through the conveying means. The solution according to the invention can be used in material conveying systems, more particularly in conveying systems for wastes. The solution according to the invention is also suited to the conveying systems and food wastes of the food industry. With the solution according to the invention, the branching sections of conveying piping can also be cleaned. By conducting cleaning liquid into the pipe section in connection with the conveying means, the cleaning can be further enhanced. By using conveying means connected together, the cleaning can be further enhanced and space can be obtained for the cleaning liquid. The combination of conveying means and a cleaning liquid space can be effectively moved for cleaning the pipe section. The solution according to the invention improves the result of sorting as the piping is cleaned in connection with, or after, the conveying of the different varieties to be conveyed. A good degree of cleaning can in this case be achieved for the different extensions. By means of the solution according to the invention energy can be saved, as the friction between the material to be transported and the wall of a cleaned conveying pipe remains low. The solution according to the invention improves the hygiene problems and odor problems of material pipe transport systems. The solution according to the invention is suited for use in a very wide size range of conveying pipings, typically for pipe diameters of 50 - 500 mm.

### Brief description of the figures

In the following, the invention will be described in more detail by the aid of an embodiment with reference to the attached drawings, wherein
Fig. 1 presents a simplified view of an embodiment of the solution according to the invention,
Fig. 2 presents a simplified view of an embodiment of the solution according to the invention, in a second phase,
Fig. 3a presents a sectioned view of a conveying means not part of the present invention,
Fig. 3b presents one conveying means of an embodiment of the invention, as seen from the end,
Fig. 3c presents a sectioned view of the conveying means of Fig. 3b,
Fig. 3d presents one conveying means according to an embodiment of the invention,
Fig. 3e further presents one conveying means not part of the present 15 invention,
Fig. 4 presents a diagram of an embodiment of the solution according to the invention,
Fig. 5 presents a diagram of an embodiment of the solution according to the invention,
Fig. 6 presents a diagram of an embodiment of the solution according to the invention,
Fig. 7 presents a diagram of an embodiment of the solution according to the invention, in a second phase,
Fig. 8 presents an embodiment of a solution not according to the invention, in a first phase,
Fig. 9 presents an embodiment of a solution not according to the invention, in a second phase,
Fig. 10 presents an embodiment of a solution not according to the invention, in a third phase,
Fig. 11 presents one embodiment of the system according to the invention,
Fig. 12 presents another embodiment of the solution according to the invention, and
Figs. 13 - 19 present the operation in different phases of an embodiment of the solution according to the invention.

### Detailed description of the invention

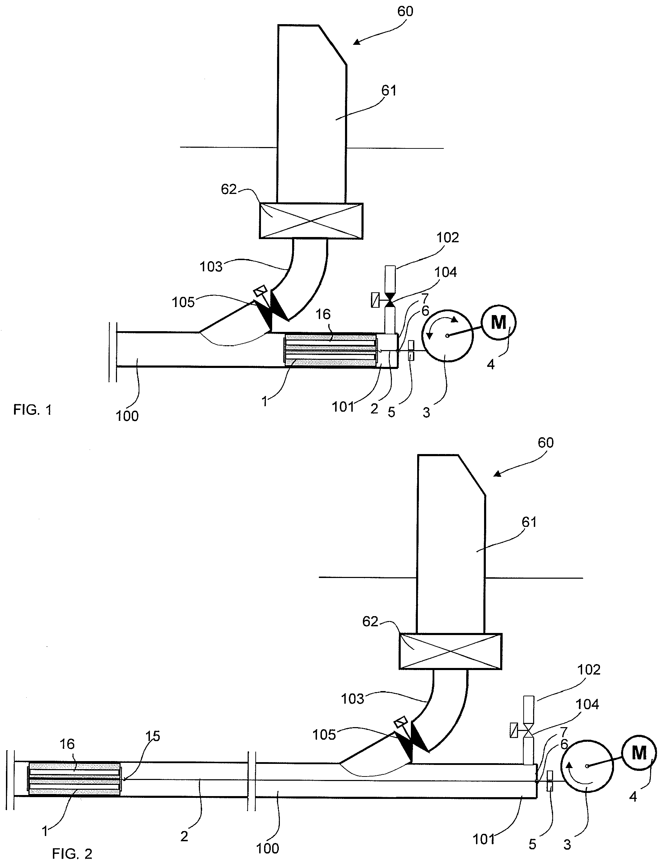

Figs. 1 and 2 present one simplified embodiment of the solution according to the invention. The figure shows a part of a conveying pipe 100 of a pneumatic material conveying system as well as an input point 60, which is connected with an input pipe 103 to the conveying pipe 100. A valve means 105 is arranged between the input pipe 103 and the conveying pipe 100. The input point comprises a feed-in container 61 and possibly also a material shaper 62, e.g. a rotary shaper. The material, such as household waste, waste paper, cardboard or other waste, is fed e.g. into a feed-in container 61 of an input point, from where it is from time to time conducted onwards into conveying piping 100. The material to be handled is shaped and compacted in the material shaper 62 and after handling is conducted via the input pipe 103 into the conveying piping 100 by means of the suction and/or a pressure difference produced by e.g. the drive devices (not presented) of a pneumatic pipe transport system.

A pipe part 101 is arranged into connection with the conveying piping 100, into connection with which pipe part conveying apparatuses 1, 2, 3, 4, 5 are arranged. The conveying apparatus comprises a conveying means 1, which is arranged in the figure in a pipe part 101, which in the embodiment of the figure is an extension of a conveying pipe section 100 of the conveying piping.

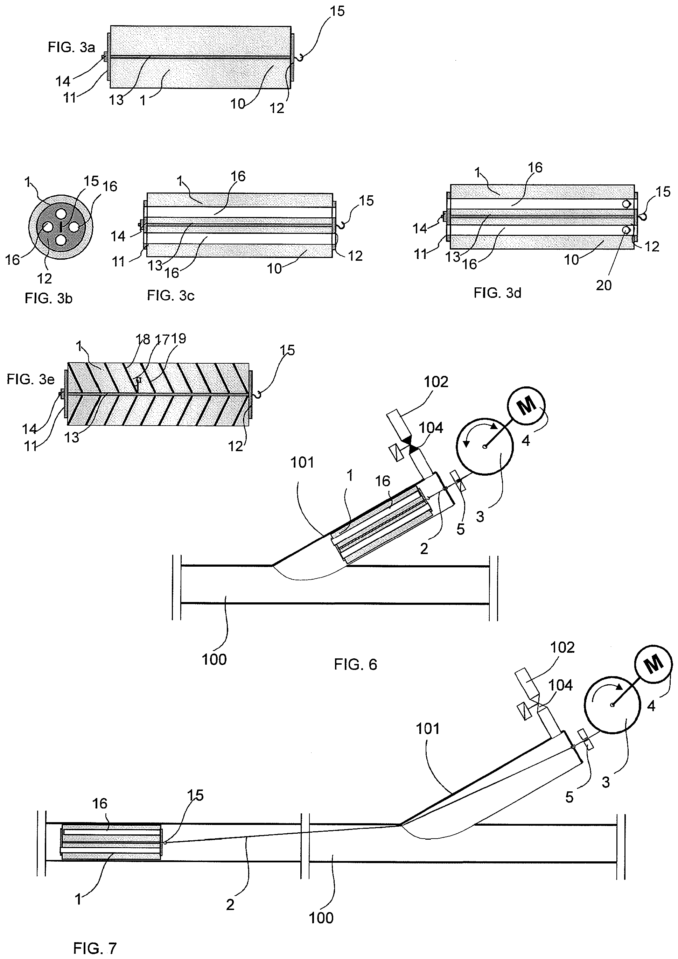

The conveying means 1 is configured in terms of its shape to be according to the cross-sectional shape of the inner surface of the pipe so that the outer wall of the conveying means 1 settles against the inner surface of the pipe section. One embodiment of a conveying means 1 not part of the present invention is presented in more detail in Fig. 3a. The conveying means 1 comprises an actual conveying means part 10 as well as the support parts 11, 12, 13, 14 of it. In the embodiment of Fig. 3a, the support parts of the conveying means comprise a first butt end part 11, a second butt end part 12, and also a coupling part 13 connecting the first and second butt end part. The coupling part 13 extends through the conveying means part 10. The coupling part 13 is preferably flexible, in which case bends can be moved through with it. According to one embodiment the conveying means part 10 is of flexible material. The cleaning part 10 is typically a replaceable part. The first butt end part 11 is fixed with a fixing means, such as with a nut, to the fixing part. Threads (not presented) are formed on the coupling part 13 at least on the end on the side of the first butt end part 11, onto which threads the counterthreads of the nut 14 fit. A fixing point 15 for the transmission means 2 of the moving device, e.g. for a wire, a line, a cable or a corresponding transmission means, is arranged on at least one of the butt end parts. In the embodiment of Fig. 3a the fixing point 15 is a hook.

Figs. 3b and 3c present one embodiment of the conveying means of the invention, in which at least replacement air duct extends through the conveying means 1. There are a number of replacement air ducts 16 in the figure. In the embodiment of the conveying means of the figure there are four replacement air ducts 16. The embodiment of Fig. 3c can be used e.g. for detaching material that is on the surface of the pipe. In this case replacement air is able to go through the conveying means 1 from the first side of it to the second along the ducts 16. The material possibly detached from the walls of the pipe by the conveying means or the other material in the pipe is displaced onwards in the piping e.g. along with the suction or transporting air flow produced by the partial-vacuum generator. Fig. 3d shows an embodiment of a conveying means, wherein a non-return valve 20 is arranged in the replacement air duct 16, in which case replacement air is able to go through the duct in only one direction. The non-return valve 20 can be e.g. a rubber flap.

Fig. 3e presents yet another embodiment of a conveying means 1 not part of the invention, wherein the conveying means comprises a number of cleaning means 17, the walls 18, 19 of which are inclined in Fig. 3e at an angle of alpha α forwards from the orthogonal direction. In this case when moving the conveying means in the direction towards which the cleaning means are inclined (in Fig. 3e to the right), in which case the cleaning means effectively scrape the inner surface of the pipe, and when the conveying means is displaced back (in Fig. 3e to the right), the cleaning means bend inwards facilitating the movement.

The conveying apparatus comprises a moving apparatus for the conveying means 1, which moving apparatus comprises in the embodiment of Fig. 1 a transmission means 2, which is wound onto a reel 3, which can be rotated around the reel axis with a drive device 4. The transmission means 2, such as a wire, line, cable, *et cetera*, can therefore be released from the reel 3 when the conveying means 1 moves in the conveying piping in a direction away from the reel. For example, from the position of Fig. 1 into the position of Fig. 2. In this case the reel 3 rotates around the reel axis in a first direction. The reel can be e.g. such that e.g. 100-200m of e.g. 1 mm cable fits onto it. One example of this type of reel is e.g. a large fishing rod reel. The drive device 4 of the reel 3 can be e.g. manually, electrically, pneumatically or hydraulically operated. The movement of the conveying means 1 in the conveying pipe 100 can be slowed down with a brake device 5. The brake device can preferably be in/on the reel or in the drive device 4. In the embodiment of the figures for the sake of clarity, the brake device is marked to act on the transmission means 2. In the figure the brake device 5 is arranged between the reel 3 and the end of the pipe section 101. An aperture 7 is formed in the end wall 7 of the pipe section 101, through which aperture the transmission means 2 is led into the pipe part 101. The brake device 5 preferably brakes the speed of the conveying means 1 when the conveying means 1 moves away from the first position, i.e. the starting position (from the position of Fig. 1 towards the position of Fig. 2). In this case the cleaning result improves compared with a situation in which the conveying means would be allowed to move freely along with the transporting air current produced by the suction of a partial-vacuum generator. With the length of movement of the transmission means 2 the movement distance of the conveying means 1 in the conveying piping can be limited. When the movement distance of the conveying means, i.e. the conveying section, has been completed, the reel 3 is rotated around the reel axis with the drive device 4, in which case when the transmission means 2 winds onto the reel 3 the conveying means 1 is pulled along with the transmission means 2 back towards its starting position (i.e. the position of Fig. 1). The movement backwards can also be performed with just the pressure difference (such as blowing) produced by a partial-vacuum generator or fan of the conveying system or together with the moving device 3, 4. In this case the transmission means 2 is wound with the reel 3 out of the pipe section.

In Figs. 1 and 2 a replacement air duct 102 is additionally arranged to the butt end area of the pipe section 101 into the space between the butt end 7 of the pipe section 101 and the starting position (Fig. 1) of the conveying means 1. A valve means 104 is in the replacement air duct 102. The replacement air valve 104 of the replacement air duct is open, when the conveying means 1 is moved in the piping.

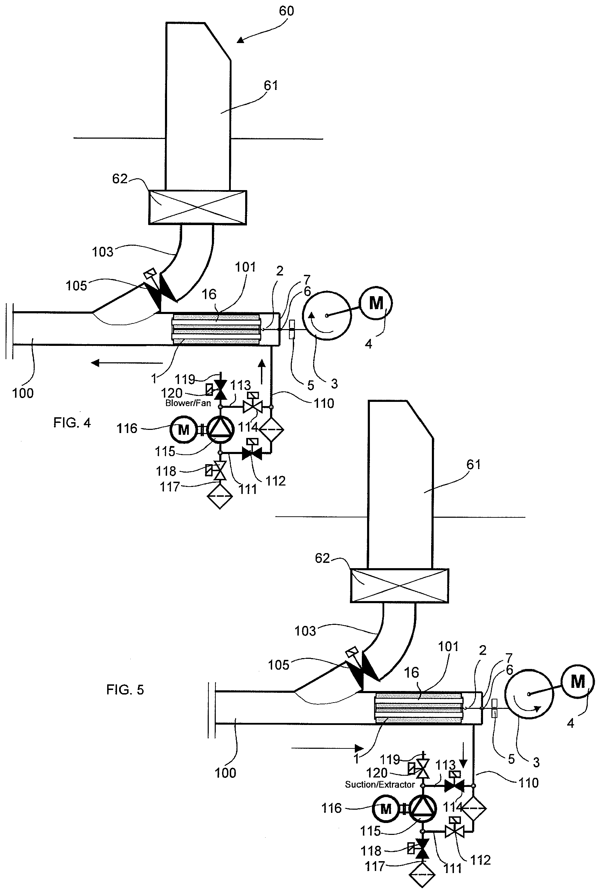

Figs. 4 and 5 present an embodiment wherein a pump apparatus is arranged to produce positive pressure or negative pressure in the butt end area of the pipe section in the space between the conveying means 1 and the butt end 7 of the pipe section. This boosts the movement of the transmission means 1 in the piping. In the situation of Fig. 4 it is endeavored to move the conveying means 1 away from the starting position. The direction of movement is marked in the figure with an arrow. Also the direction of rotation of the reel 3 is marked in the figure with an arrow. In this situation the pump device 115, which is driven with a drive device 116, is connected from the pressure side, i.e. from the blowing side, to blow along the ducts 113, 116 into the space between butt end 7 of the pipe section 101 and the conveying means 1. The valve means 114 in the duct 113 is in this case open. The suction side of the pump 115 is connected to the suction air duct 117, the valve 118 of which is open. When the blowing side of the pump 115 is connected in the manner presented by Fig. 4, movement of the conveying means 1 away from the staring position is achieved or at least boosted.

In the situation of Fig. 5 it is endeavored to move the conveying means towards the starting position. The direction of movement is marked in Fig. 5 with an arrow. Also the direction of rotation of the reel 3 is marked in the figure with an arrow. In this situation the pump device 115, which is driven with the drive device 116, is connected from the suction side along the ducts 111, 116 into the space between butt end 7 of the pipe section 101 and the conveying means 1. The valve 112 in the duct 111 is in this case open. The valve of the duct 117 is closed. Correspondingly, the valve 114 of the duct 113 is closed. The blowing side of the pump is connected to blow into the exhaust duct 119, the valve 120 of which is open. The suction to be achieved with the pump device 115 achieves, or at least boosts, the movement of the conveying means 1 towards the starting position.

Figs. 6 and 7 present an embodiment wherein the pipe section 101 is a Y-branch of the conveying piping 100, which branch forms an angle with the conveying pipe 100. When it is desired to clean the conveying pipe section 100, the suction side of the partial-vacuum generator (not presented) of the pneumatic conveying system is connected to the conveying pipe 100, in which case when opening the replacement air valve 104 in the replacement air duct 102, the conveying means moves from the position of Fig. 6 into the situation of Fig. 7, and possibly further onwards in the piping. Depending e.g. on the length of the transmission means 2 (e.g. of the line, wire or cable), which limits the movement of the conveying means. When the desired conveying movement/cleaning movement has been brought about, the conveying means is wound along with the transmission means 2 back to the starting position (Fig. 6). Here, the conveying means can consequently be guided with the transmission means 2 into the correct branch of the pipe section 101, although the air current of the pipe section 100 would also try to take the conveying means past the branch.

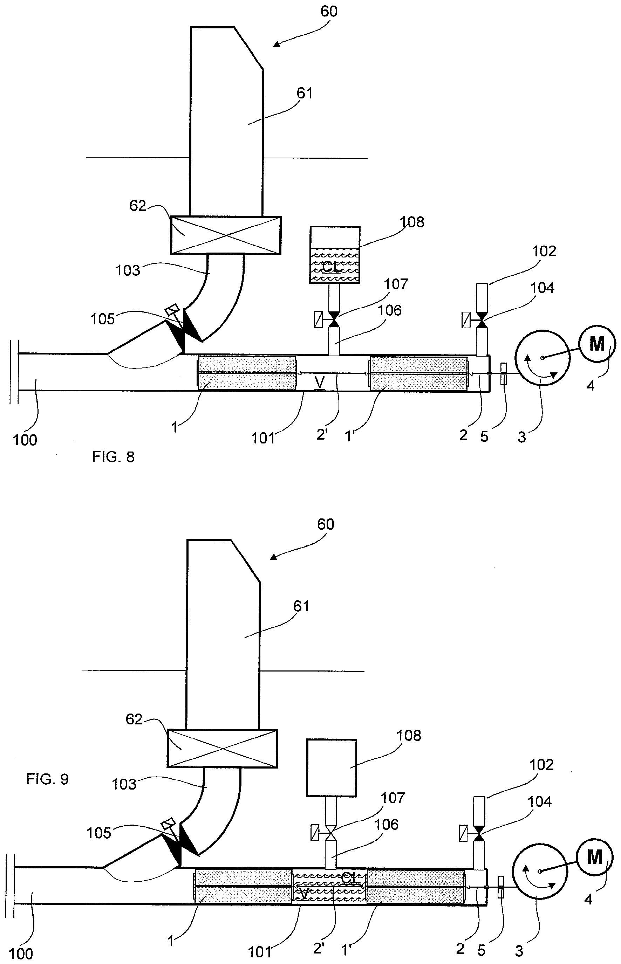

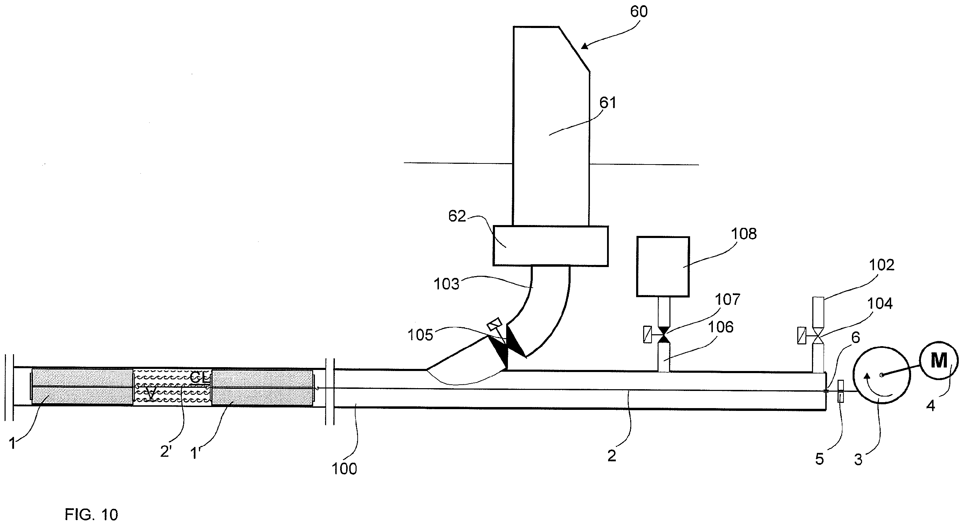

Figs. 8, 9 and 10 present an embodiment, not part of the present invention, wherein cleaning liquid CL is used, in addition to a conveying means. In the embodiment of the figures there are two conveying means 1, 1', which are arranged at a distance from each other in the cleaning movement direction. The first conveying means 1 and the second conveying means 1' are connected to each other with coupling means 2'. The coupling means 2' is e.g. a wire, a line, a cable or a rod. Between the first and the second conveying means 1, 1' a space V is formed, which is bounded by the butt end of the first conveying means 1, the butt end of the second conveying means 1' and the inner wall of the piping 100, 101 that is at the point of the space V at that time. When it is desired to use cleaning liquid CL in addition to conveying means 1, 1', cleaning liquid is conducted into the space V from the cleaning liquid reservoir 108 along the input branch coupling 106 for cleaning liquid by opening the valve 107. The input branch coupling 106 for cleaning liquid is preferably configured at the point of the pipe section 101 at which the space V between the first conveying means 1 and the second conveying means 1' is situated in the starting position of the conveying means 1,1'. Fig. 9 presents a situation in which the cleaning liquid CL has been conducted into the space V. After this the conveying means 1,1' and the cleaning liquid CL in the space V can be moved as a combination in a corresponding manner to what has been presented earlier in connection with an individual conveying means e.g. in Figs. 1 and 2. The cleaning liquid CL can be e.g. a disinfecting cleaning liquid. Space for the cleaning liquid can, of course, also be arranged in the conveying means.

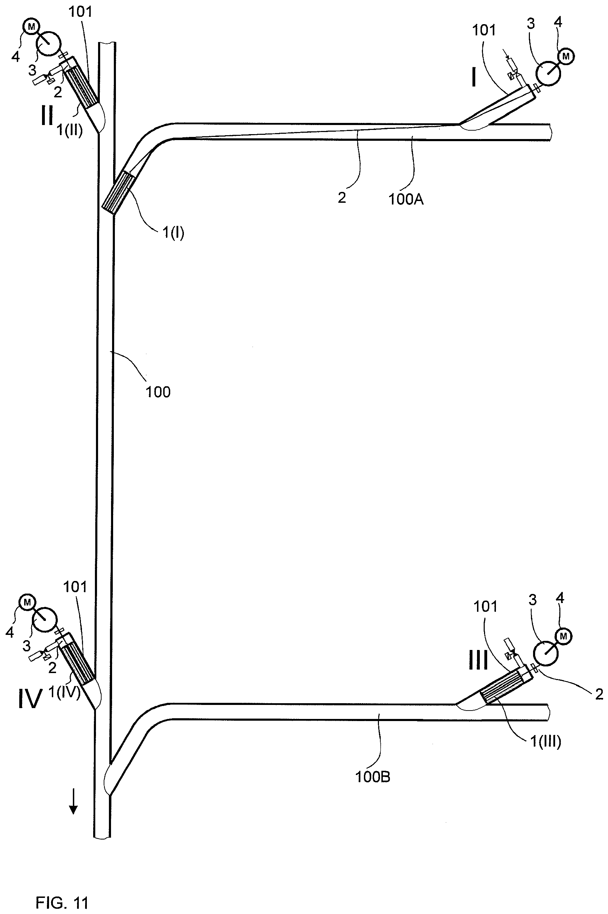

Fig. 11 further presents a part of the system according to an embodiment of the invention, when connected to the material conveying piping of a material conveying system, more particularly a pneumatic wastes conveying system, which figure presents a part of the conveying piping 100, 100A, 100B. A number of conveying devices according to an embodiment of the invention are arranged in the conveying piping, which conveying devices comprise a conveying means 1, connected to it a transmission means 2, which is a wire, line, cable or corresponding means to be wound onto the reel 3, and a drive device 4 of the reel. In the system material is conveyed, and/or the pipe sections of the conveying piping100, 100A, 100B of the material conveying system are cleaned/emptied, in a certain sequence, in Fig. 11 in the numerical sequence (I, II, III, IV), with the conveying means 1 (I), 1 (II), 1 (III), 1 (IV). In the system the conveying distances of the conveying means 1 (I), 1 (II), 1 (III), 1 (IV) are arranged in such a way that the conveying movement, i.e. conveying distance, of the conveying means 1 (I), 1 (II), 1 (III) of the previous conveying section in the conveying sequence (the conveying sequence of each conveying apparatus is marked with the roman numerals I, II, II, IV, always extends in the conveying pipe slightly into the pipe section of the conveying means of the following conveying device 1 (II), 1 (III), 1 (IV) in the conveying sequence, from which pipe section it cleans/conveys the material onwards. In this case the material, possible cleaning waste, or other material in the pipe section, to be conveyed along with a conveying means 1 (I), 1 (II), 1(III), 1 (IV), in front of it, in the conveying direction is conveyed onwards from the pipe section in the conveying sequence (I, II, II, IV) always to the pipe section of the conveying means of the next conveying device. The conveying distances of the conveying means 1 (I), 1 (II), 1 (III), 1 (IV) is limited with the transmission means 2, which is connected to the conveying means 1 (I), 1 (II), 1(III), 1 (IV). The transmission means 2 is arranged at its second end onto a reel 3, which is driven, if necessary, with a drive device 4. In Fig. 11, the pipe section 100A is cleaned/emptied first (I) by displacing the conveying means 1 (I) from the starting position, which is in the pipe section 101, a conveying distance, i.e. a conveying movement, which extends up to the main conveying pipe 100 of the figure. In the figure the conveying means 1 (I) is presented in a position in which it is partly on the side of the main conveying pipe. Next, the conveying means 1 (I) can be displaced back in the first pipe section 100A and simultaneously the conveying means 1 (II) of the pipe section intended to be second (II) in sequence can already start to be displaced for cleaning/emptying the second pipe section of material with the second conveying means, which in the figure is in the starting position of the pipe section intended to be second (II), in the pipe section 101. The conveying section intended to be second extends e.g. in the figure further onwards in the conveying direction (marked in the figure with an arrow). In this case the second conveying section could extend e.g. to the point at which the conveying pipe section 100B that is intended to be the third emptied connects to the main conveying pipe, preferably to slightly past it. After this the material is conveyed and/or the pipe section 100B that is intended to be the third (III) is cleaned/emptied with its conveying means 1 (III). Finally the material is conveyed and/or the pipe section that is intended to be the fourth (IV) in Fig. 11 is cleaned/emptied, which pipe section is, in the conveying direction in the main conveying pipe 100, an extension of the pipe section that is intended to be the second (II) cleaned/emptied, with the conveying means 1 (IV) of the fourth conveying apparatus, which conveying means in the figure is in the starting position of the pipe section intended to be fourth (IV), in the pipe section 101. In this way the conveying piping in the system or the desired material that has collected in a section of the conveying piping is brought to be conveyed or cleaned/emptied one pipe section at a time.

The conveying means 1 (I), 1 (II), 1 (III), 1 (IV) in the figures is plug-shaped, in which case it can also be used as a shut-off means of the piping 100, 100A, 100B, 101. In this case it can function in the piping as a shut-off valve, and possibly at least some of the shut-off valves of the piping of the pneumatic material conveying system can be replaced with it in the piping.

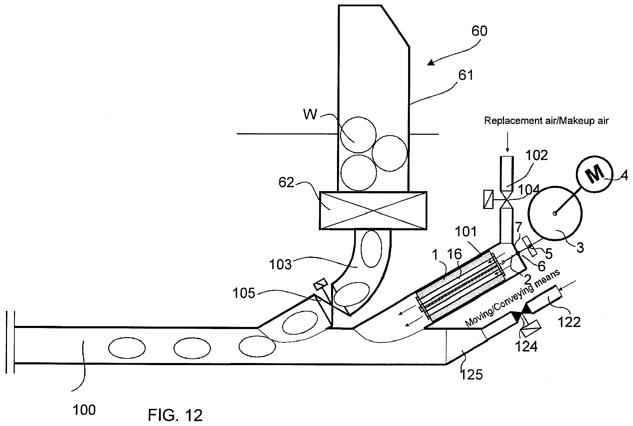

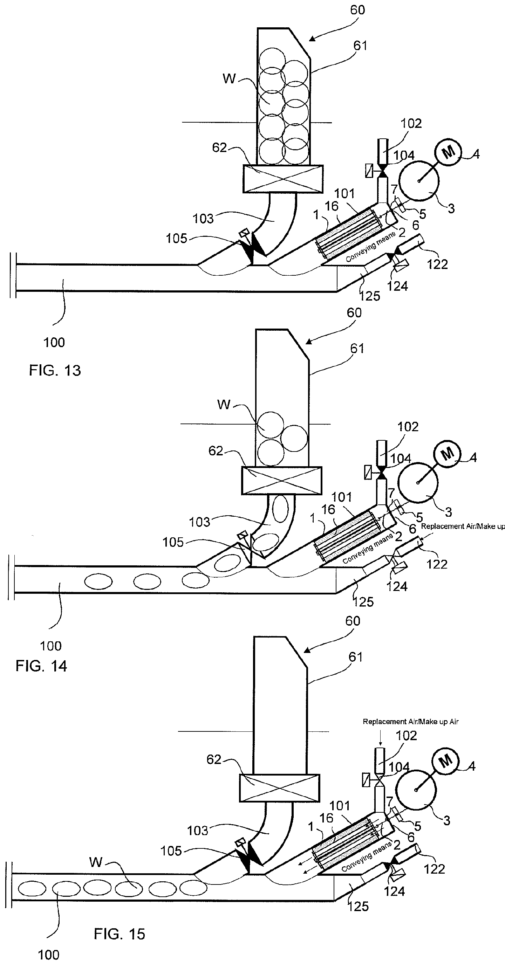

Fig. 12 further presents the operation of the solution according to an embodiment of the invention, in connection with a material input point. Presented in the figure is a situation in which there is material W, more particularly waste material, in the feed-in container of a material input point 60, which material is desired to be emptied into the conveying piping 100, via the input pipe 103. Before conveying it into the input pipe, the material is possibly conducted through a rotary shaper 62, i.e. a formatter, of material, which compacts the material and shapes it to be better suited to the piping 103, 100. A pipe section 101 comprising a starting position for the conveying means 1 is arranged into connection with the conveying pipe 100, connecting to it. The conveying pipe section 101 is at an angle with respect to the main conveying pipe so that the conveying means 1 can be conducted, if necessary, into the conveying piping. In the embodiment of the figure, a replacement air duct 16 extends through the conveying means 1 as presented in Figs. 3b and 3c. The apparatus comprises a transmission means 2, such as a wire, line, cable or other transmission means suited for winding onto the reel 3. The moving apparatus already presented above, comprising a reel and its drive device, is also in the figure. A brake 5 is also separately presented in the figure. The conveying pipe section comprises a replacement air duct 102 and a replacement air valve in it. The conveying pipe 100 extends past (in the figure, to the right) the intersection point of the pipe section 101 of the starting position of the conveying means. In the figure a convergent part 125, to which a second replacement air duct 122 and in it a second replacement air valve 124 connects, is formed in this section, in the butt end area of it, in the conveying pipe 100. The operation of this embodiment is presented in more detail in Figs. 13-19.

Figs. 13 - 19 present the operation in its different phases of one embodiment of the invention. Fig. 13 shows the starting situation, in which there is material W in the feed-in container 61, which material is intended to be conveyed onwards in the conveying piping 100. The conveying means 1 is in the starting location in the pipe section 101. The replacement air valves 104, 124 of the replacement air ducts 102, 122 are closed.

In Fig. 14, the material W is fed into the piping 100 by opening the valve 105 of the input pipe 103. The material displaces through the rotary shaper via the input piping into the conveying pipe 100. The replacement air valve 124 of the replacement air duct 122 is open. In this case the waste is conveyed onwards in the piping by the aid of the pressure difference and transporting air flow produced by the partial-vacuum generator of the pneumatic pipe transport system for material. In the input phase the suction produced by the partial-vacuum generator is smaller than in the actual conveying phase. Also the energy consumption is smaller.

In Fig. 15 the desired amount (in the figure all) of the material W has displaced from the feed-in container 61 into the conveying piping 100. Now it is desired to feed the conveying means 1 into the conveying piping 100 from its starting position, which is in pipe section 101. The second replacement air valve 124 in the second the replacement air duct 122 is closed. The replacement air valve 104 of the replacement air duct 102 in the pipe section 101 is opened. In this case replacement air is obtained via the replacement air ducts 16 of the conveying means 1 for conveying the waste material W. The conveying means 1 starts moving when the transmission means 2, such as a wire, line, cable or corresponding, is released from the reel 3. The pressure difference arising over the ducts 16 of the conveying means 1 moves the conveying means 1 in the piping. The blowing of replacement air traveling through from the ducts 16 of the conveying means 1, on the one hand, blows into a material aggregation possibly traveling in front of the conveying means, in which case, *inter alia*, the susceptibility to blockage formation decreases. On the other hand, if a material aggregation forms in front of the cleaning means 1 and closes a part of the duct 16, the pressure difference on the different sides of the conveying means 1 increases. This, in turn, boosts displacement of the conveying means and consequently the material conveying capability in the piping.

A pressure loss in the air flow occurs over the ducts, e.g. in one embodiment in the region of 50-100 mbar. In this case in one embodiment a force in the region of 35-70 kp (0.34 - 0.69 kN) is achieved for moving the conveying means 1. Typically in a waste conveying application according to one embodiment a (negative) pressure of 300-600 mbar is available in the conveying piping for material. When the transporting air flow or replacement air travels through the duct 16 of the conveying means 1, the air flow transports in the conveying direction some of the waste material W, e.g. large and medium-sized wastes, in front of the conveying means. The remaining part of the material, typically small waste materials, displaces in the conveying pipe conveyed by the conveying means 1. This arrangement has the advantage, compared to a conventional pneumatic pipe transport system for material, that the transporting air flow does not need to be dimensioned for conveying small material fractions by the aid of just a transporting air flow. In this case a significant power saving can be achieved.

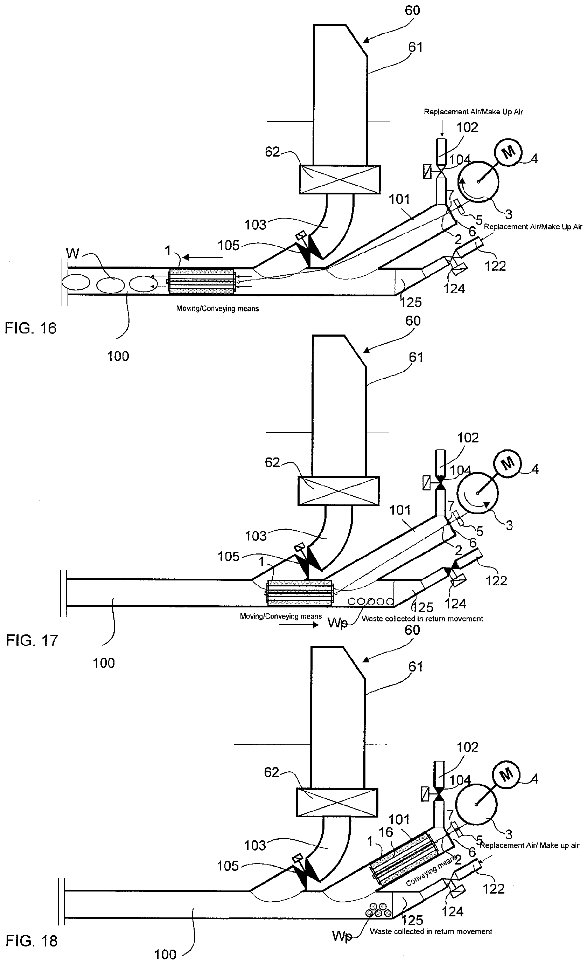

In Fig. 16 the piping 100 is cleaned with the conveying means and possibly the material W in the conveying piping 100 is conveyed onwards (arrow in Fig. 16). When the conveying means 1 has displaced from its starting position into the piping 100, the replacement air valves of both replacement air ducts can be opened. In Fig. 16 the valves 104, 124 of both replacement air ducts 102 and 122 are open. The suction/pressure difference achieved in the piping by the partial-vacuum generator of the pneumatic material conveying system can boost the conveying efficiency.

Fig. 17 presents the return movement of the conveying means 1 towards the starting position. The drive device 4 is used for the return movement in the case of the figure, driven by which drive device the transmission means 2 is wound onto the reel 3. In the return movement of the conveying means 1 an amount, generally smaller, of waste material Wp that has detached from the conveying pipe 100 collects in the butt end area of the conveying pipe, near the convergent section 125 of it, when the conveying means 1 is displaced back towards the starting position.

The waste material Wp collected along with the return movement of the conveying means 1 can be conveyed in the conveying pipe 100, by the aid of the pressure difference produced in the conveying pipe 100 by the suction the partial-vacuum generator of the material conveying system, towards the outlet end (to the left in figure 18), when the replacement air valve 124 of the second replacement air duct 122 is opened.

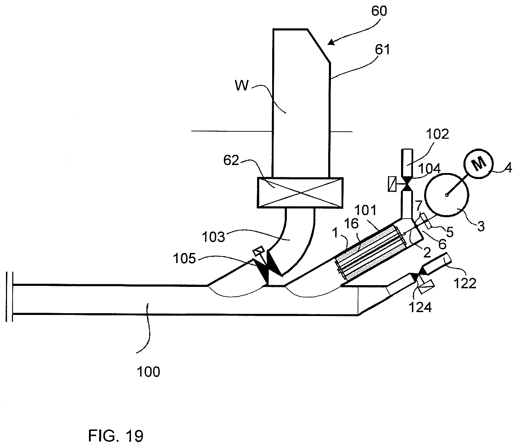

In Fig. 19 the operating cycle has been completed and the feed-in container 61 of the feed point 60 could again be emptied of possible waste.

The invention thus relates to a method for conveying material that is in the piping of a pneumatic waste conveying system, in which method at least one conveying means 1 of material is fed into a conveying pipe, and a pressure difference is achieved in the pipe and under the influence of the pressure difference the conveying means is brought to move for conveying material in a conveying pipe section. In the method a conveying means 1 or a combination of a number of conveying means 1, 1' is moved in the conveying piping 100, 101 and that the conveying means 1 or combination of a number of conveying means 1, 1' is connected to a transmission means 2, with which the movement of the conveying means 1 or combination of a number of conveying means 1, 1' in the conveying piping is limited or guided and that a duct 16 is arranged in the conveying means 1 through it from a first side to a second side, through which duct transporting air is conducted in the conveying piping.

According to one embodiment the transmission means 2 is arranged in a moving device 3, 4, which moving device 3, 4 comprises at least a reel 3 and its drive device 4.

According to one embodiment the transmission means 2 is a transmission means, such as a wire, line, cable or corresponding, to be wound onto a reel 3 and discharged from the reel 3.

According to one embodiment the movement speed of the conveying means 1 or combination of a number of conveying means 1, 1' is slowed down, e.g. with a brake device 5.

According to one embodiment the conveying means 1 or a combination of a number of conveying means 1, 1' is moved in the piping by pulling with the transmission means 2 with the moving device 3, 4 alone or together with negative pressure and/or positive pressure.

According to one embodiment the conveying means 1 or a combination of a number of conveying means 1, 1' is moved in the conveying piping 100, 101 from the starting position the distance desired in a first direction and then in a second direction back to the staring position or at least in the direction of the starting position.

According to one embodiment the conveying distance of the conveying means 1 in the conveying piping 100, 101 is limited by a brake device 5 acting on the transmission means 2 or by limiting the winding out of the transmission means 2 from the reel 3.

According to one embodiment the movement of the conveying means 1 in the conveying piping is facilitated by arranging replacement air into the pipe section 101 of the starting position of the conveying means, into the space between its butt end part 7 and the conveying means 1, when the conveying means moves away from the starting position, or by removing air from there when the conveying means moves towards the starting position, via the most suitable replacement air duct 102.

According to one embodiment the movement of the conveying means 1 is facilitated by bringing air into the pipe section 101 of the starting position of the conveying means, into the space between its butt end part 7 and the conveying means 1, by connecting the blowing side of a pump device 115 to it, or by removing air from the pipe section 101 of the starting position, from the space between its butt end part 7 and the cleaning means 1, by connecting the suction side of the pump device 115 to it.

According to one embodiment cleaning liquid CL, in addition to the conveying means 1, is brought into the conveying pipe, which cleaning liquid is moved in the conveying piping together with the conveying means 1 or the conveying means 1, 1'.

According to one embodiment the conveying means 1, 1' and the cleaning liquid CL brought into the space V between the inner surface of the conveying pipe 100, 101 and the conveying means are moved as a combination.

According to one embodiment in the method possible pipe blockages are also removed with the conveying means 1.

According to one embodiment the conveying means 1 is used as a shut-off means in the conveying piping.

According to one embodiment some of the material to be conveyed is conveyed from in front of the conveying means with the air current traveling through the duct 14 and some of the material to be conveyed is conveyed with the conveying means 1.

The invention also relates to conveying apparatus for the waste material of a pneumatic waste conveying system, which apparatus comprises at least one conveying means 1 to be arranged in a conveying pipe, which conveying means is configured to move under the influence of a pressure difference for conveying material that is in a pipe in at least one direction in the conveying pipe section intended for cleaning. The conveying means 1 is connected to a transmission means 2, which is configured to limit or to guide the movement of the conveying means 1, and a duct 16 is arranged in the conveying means 1 through it from a first side to a second side, such that the conveying means is adapted to conduct replacement air in the conveying piping through the duct 16 of the conveying means 1.

According to one embodiment the transmission means is arranged in a moving device 3, 4, which moving device 3, 4 comprises at least a reel 3 and its drive device 4.

According to one embodiment the transmission means 2 is a transmission means, such as a wire, line, cable or corresponding, to be wound onto a reel 3 and discharged from the reel 3.

According to one embodiment the apparatus comprises a brake device 5.

According to one embodiment the apparatus comprises a replacement air duct 102, which is provided with a valve means 104, and arranged on the pipe section 101 of the starting position of the conveying means 1, in a section between its butt end part 7 and the conveying means 1.

According to one embodiment the apparatus comprises a pump device 115, the suction side and/or blowing side of which can be connected to the pipe section 101 of the starting position of the conveying means 1, in a section between its butt end part 7 and the conveying means 1.

According to one embodiment there are a number of conveying means 1, 1', which are connected to each other with coupling means 2'.

According to one embodiment the apparatus comprises means for bringing cleaning liquid CL into the conveying pipe, preferably into connection with the conveying means 1 or a number of conveying means 1,1'.

According to one embodiment the conveying means 1 is configured to function as a shut-off means in the conveying piping.

According to one embodiment a valve means 20, such as a non-return valve, is arranged in the duct 16 of the conveying means 1.

The invention also relates to a pneumatic waste conveying system, which comprises conveying piping, means for feeding the material to be conveyed into the conveying piping, as well as means for achieving a pressure difference in the conveying piping, and a separating device for separating the material from the transporting air. The system comprises a number of conveying devices, each of which conveying devices comprises at least one conveying means 1 to be arranged in a conveying pipe, which conveying means is configured to move under the influence of a pressure difference for conveying material in a pipe in at least one direction in a conveying pipe section intended for cleaning, and the conveying means 1 is connected to a transmission means 2, which is configured to limit or to guide the movement of the conveying means 1, and a duct 16 is arranged in the conveying means 1 through the conveying means from a first side to a second side, such that the conveying means 1 is adapted to conduct replacement air in the conveying piping through the duct 16 of the conveying means, and the conveying means 1 (I), 1 (II), 1 (III), 1 (IV) of a number of conveying devices are configured to convey in a desired sequence I, II, II, IV material that has collected in the conveying pipe section onwards in the conveying piping, preferably towards a separating device.

According to one embodiment in the system the conveying distances of the conveying means 1 (I), 1 (II), 1 (III), 1(IV) are arranged in such a way that the conveying movement, i.e. conveying distance, of the conveying means 1 (I), 1 (II), 1 (III) of the previous conveying section in the conveying sequence, always extends in the conveying pipe slightly into the pipe section of the conveying means of the following conveying device 1II, 1III, 1IV in the conveying sequence, from which pipe section it conveys the material onwards.

According to one embodiment the transmission means 2 of the conveying device is arranged in a moving device 3, 4, which moving device 3, 4 comprises at least a reel 3 and its drive device 4.

According to one embodiment the transmission means 2 of the conveying device is a transmission means, such as a wire, line, cable or corresponding, to be wound onto a reel 3 and discharged from the reel 3.

According to one embodiment in the system the conveying means 1 is moved in the return direction in the piping by pulling with the transmission means 2 with the moving device 3, 4 alone or together with negative pressure and/or positive pressure.

According to one embodiment the conveying apparatus comprises a replacement air duct 102, which is provided with a valve means 104, and arranged on the pipe section 101 of the starting position of the conveying means 1, in the section between its butt end part 7 and the conveying means 1.

According to one embodiment the conveying apparatus comprises a pump device 115, the suction side and/or blowing side of which can be connected to the pipe section 101 of the starting position of the conveying means 1, in a section between its butt end part 7 and the conveying means 1.

According to one embodiment there are a number of conveying means 1, 1', which are connected to each other with coupling means 2'.

According to one embodiment the conveying apparatus comprises means for bringing cleaning liquid CL into the conveying pipe, preferably into connection with the conveying means 1 or a number of conveying means 1,1'.

According to one embodiment in the system the conveying means 1 is configured to function as a shut-off means in the conveying piping.

According to one embodiment the movement of the conveying means 1 is slowed down by slowing the movement of the transmission means.

According to one embodiment a valve means 20, such as a non-return valve, is arranged in the duct 16 of the conveying means 1.

According to one embodiment the movement of the conveying means 1 is slowed down by slowing the movement of the transmission means. Typically the winding out of the reel is slowed down with the brake device 5. In this case the conveying speed of the conveying means in the first direction can be easily adjusted. With this possibly also the cleaning result can be influenced.

The diameter of conveying piping is typically in the region of 50 - 500 mm.

The conveying apparatus according to the invention can also be used for cleaning or for clearing and removing a possible blockage occurring in the piping, in addition to, or instead of, for conveying material.

In the embodiment of the invention, with the transmission means the escaping of the conveying means into the piping along with the air current is prevented and at the same time the movement speed can, if necessary, be braked. The conveying means can be displaced outwards with suction and inwards with pressure and alternatively can be pulled inside with the transmission means. It can also be conceived that, together, the transmission means pulls with the moving device and the pressure in the piping pushes the conveying means inside. The cable also functions as a guide, particularly in a Y-branch, where otherwise it would go straight.

The conveying means can be e.g. cylindrical or spherical or can possess some other suitable shape. The conveying means becomes adequately closer against the inside wall of the piping and at the same time cleans by detaching from the wall any material that has possibly accumulated on the wall. With the conveying means the inner surface of the conveying pipe can be cleaned instead of, or in addition to, the conveying of material. The conveying means is in this case a cleaning means.

Typically the material to be conveyed in the pipings of a material conveying system is waste material, such as waste material arranged in bags, e.g. household wastes or sorted material. The material is conducted along the conveying piping to the output end, where it is separated with a separating device from the transporting air and is conveyed into a waste container, transport container or corresponding.

It is obvious to the person skilled in the art that the invention is not limited to the embodiments presented above, but that it can be varied within the scope of the claims presented below. The characteristic features possibly presented in the description in conjunction with other characteristic features can if necessary be used separately to each other.

## Claims

1. Method for conveying material that is in the piping of a pneumatic waste conveying system, in which method at least one conveying means (1) of material is fed into a conveying pipe, and a pressure difference is achieved in the pipe and under the influence of the pressure difference the conveying means is brought to move for conveying material in the conveying pipe section, wherein in the method a conveying means (1) or a combination of a number of conveying means (1, 1') is moved in the conveying piping (100, 101) and in that the conveying means (1) or combination of a number of conveying means (1, 1') is connected to a transmission means (2), with which the movement of the conveying means (1) or combination of a number of conveying means (1, 1') in the conveying piping is limited or guided, **characterized in that** a duct (16) is arranged in the conveying means (1) through it from a first side to a second side, through which duct transporting air is conducted in the conveying piping.

2. Method according to claim 1, **characterized in that** the transmission means (2) is arranged in a moving device (3, 4), which moving device (3, 4) comprises at least a reel (3) and its drive device (4).

3. Method according to claim 2, **characterized in that** the transmission means (2) is a transmission means, such as a wire, line, cable or corresponding, to be wound onto the reel (3) and discharged from the reel (3).

4. Method according to any of claims 1 - 3, **characterized in that** the movement speed of the conveying means (1) or combination of a number of conveying means (1, 1') is slowed down, e.g. with a brake device (5).

5. Method according to any of claims 1 - 4, **characterized in that** the conveying means (1) or a combination of a number of conveying means (1, 1') is moved in the piping by pulling with the transmission means (2) with the moving device (3, 4) alone or together with negative pressure and/or positive pressure.

6. Method according to any of claims 1 - 5, **characterized in that** the conveying means (1) or a combination of a number of conveying means (1, 1') is moved in the conveying piping (100, 101) from the starting position the distance desired in a first direction and then in a second direction back to the staring position or at least in the direction of the starting position.

7. Method according to any of claims 1 - 6, **characterized in that** the conveying distance of the conveying means (1) in the conveying piping (100, 101) is limited by a brake device (5) acting on the transmission means (2) or by limiting the winding out of the transmission means (2) from the reel (3).

8. Method according to any of claims 1 - 7, **characterized in that** the movement of the conveying means (1) in the conveying piping is facilitated by arranging replacement air into the pipe section (101) of the starting position of the conveying means, into the space between its butt end part (7) and the conveying means (1), when the conveying means moves away from the starting position, or by removing air from there when the conveying means moves towards the starting position, via the most suitable replacement air duct (102).

9. Method according to any of claims 1 - 8, **characterized in that** the movement of the conveying means (1) is facilitated by bringing air into the pipe section (101) of the starting position of the conveying means, into the space between its butt end part (7) and the conveying means (1), by connecting the blowing side of a pump device (115) to it, or by removing air from the space between the pipe section (101) of the starting position, its butt end part (7), and the cleaning means (1) by connecting the suction side of a pump device (115) to it.

10. Method according to any of claims 1 - 9, **characterized in that** cleaning liquid (CL), in addition to the conveying means (1), is brought into the conveying pipe, which cleaning liquid is moved in the conveying piping together with the conveying means (1) or the conveying means (1, 1').

11. Method according to any of claims 1 - 10, **characterized in that** the conveying means (1, 1') and the cleaning liquid (CL) brought into the space (V) between the inner surface of the conveying pipe (100, 101) and the conveying means are moved as a combination.

12. Method according to any of claims 1 - 11, **characterized in that** in the method possible pipe blockages are also removed with the conveying means (1).

13. Method according to any of claims 1 - 12, **characterized in that** the conveying means (1) is used as a shut-off means in the conveying piping.

14. Method according to any of claims 1 - 13, **characterized in that** some of the material to be conveyed is conveyed from in front of the conveying means with the air current traveling through the duct (14) and some of the material to be conveyed is conveyed with the conveying means (1).

15. Conveying apparatus for the waste material of a pneumatic waste conveying system, which apparatus comprises at least one conveying means (1) to be arranged in a conveying pipe, which conveying means is configured to move under the influence of a pressure difference for conveying material in a pipe in at least one direction in the conveying pipe section intended for cleaning, wherein the conveying means (1) is connected to a transmission means (2), which is configured to limit or to guide the movement of the conveying means (1), **characterized in that** a duct (16) is arranged in the conveying means (1) through the conveying means (1) from a first side to a second side, such that the conveying means (1) is adapted to conduct replacement air in the conveying piping through the duct (16) of the conveying means (1).

16. Apparatus according to claim 15, **characterized in that** the transmission means is arranged in a moving device (3, 4), which moving device (3, 4) comprises at least a reel (3) and its drive device (4).

17. Apparatus according to claim 16, **characterized in that** the transmission means (2) is a transmission means, such as a wire, line, cable or corresponding, to be wound onto the reel (3) and discharged from the reel (3).

18. Apparatus according to any of claims 15 - 17, **characterized in that** the apparatus comprises a brake device (5).

19. Apparatus according to any of claims 15 - 18, **characterized in that** the apparatus comprises a replacement air duct (102), which is provided with a valve means (104), and arranged on the pipe section (101) of the starting position of the conveying means (1), in a section between its butt end part (7) and the conveying means (1).

20. Apparatus according to any of claims 15 - 19, **characterized in that** the apparatus comprises a pump device (115), the suction side and/or blowing side of which can be connected to the pipe section (101) of the starting position of the conveying means (1), in a section between its butt end part (7) and the conveying means (1).

21. Apparatus according to any of claims 15 - 20, **characterized in that** there are a number of conveying means (1, 1'), which are connected to each other with coupling means (2').

22. Apparatus according to any of claims 15 - 21, **characterized in that** the apparatus comprises means for bringing cleaning liquid (CL) into the conveying pipe, preferably into connection with the conveying means (1) and/or a number of conveying means (1, 1').

23. Apparatus according to any of claims 15 - 22, **characterized in that** the conveying means (1) is configured to function as a shut-off means in the conveying piping.

24. Apparatus according to any of claims 15 - 23, **characterized in that** a valve means (20), such as a non-return valve, is arranged in the duct (16) of the conveying means (1).

25. Pneumatic waste conveying system, which comprises conveying piping, means for feeding the material to be conveyed into the conveying piping, as well as means for achieving a pressure difference in the conveying piping and a separating device for separating the material from the transporting air, **characterized in that** the system comprises a number of conveying devices, each of which conveying devices comprises at least one conveying means (1) to be arranged in a conveying pipe, which conveying means is configured to move under the influence of a pressure difference for conveying material in a pipe in a conveying pipe section intended for cleaning, in at least one direction, and **in that** the conveying means (1) is connected to a transmission means (2), which is configured to limit or to guide the movement of the conveying means (1), and **in that** a duct (16) is arranged in the conveying means (1) through the conveying means (1) from a first side to a second side, such that the conveying means (1) is adapted to conduct replacement air in the conveying piping through the duct (16) of the conveying means (1), and **in that** the conveying means (1 (I), 1 (II), 1 (III), 1 (IV)) of a number of conveying devices are configured to convey in a desired sequence (I, II, II, IV) material that has collected in the conveying pipe section onwards in the conveying piping, preferably towards a separating device.

26. System according to claim 25, **characterized in that** in the system the conveying distances of the conveying means (1 (I), 1 (II), 1 (III), 1 (IV)) are arranged in such a way that the conveying movement, i.e. conveying distance, of the conveying means (1 (I), 1 (II), 1 (III)) of the previous cleaning section in the conveying sequence, always extends in the conveying pipe slightly into the pipe section of the conveying means of the following conveying device (1 (II), 1 (III), 1 (IV)) in the conveying sequence, from which pipe section it conveys the material onwards.

27. System according to claim 25 or 26, **characterized in that** a transmission means (2) of the conveying device is arranged in a moving device (3, 4), which moving device (3, 4) comprises at least a reel (3) and its drive device (4).

28. System according to claim 27, **characterized in that** the transmission means (2) of the conveying device is a transmission means, such as a wire, line, cable or corresponding, to be wound onto the reel (3) and discharged from the reel (3).

29. System according to any of claims 25 - 28, **characterized in that** in the system the conveying means (1) is moved in the return direction in the piping by pulling with the transmission means (2) with the moving device (3, 4) alone or together with negative pressure and/or positive pressure.

30. System according to any of claims 25 - 29, **characterized in that** the conveying apparatus comprises a replacement air duct (102), which is provided with a valve means (104), and arranged on the pipe section (101) of the starting position of the conveying means (1), in a section between its butt end part (7) and the conveying means (1).

31. System according to any of claims 25 - 30, **characterized in that** the conveying apparatus comprises a pump device (115), the suction side and/or blowing side of which can be connected to the pipe section (101) of the starting position of the conveying means (1), in a section between its butt end part (7) and the conveying means (1).

32. System according to any of claims 25-31,**characterized in that** there are a number of conveying means (1, 1'), which are connected to each other with coupling means (2').

33. System according to any of claims 25 - 32, **characterized in that** the conveying apparatus comprises means for bringing cleaning liquid (CL) into the conveying pipe, preferably into connection with the conveying means (1) or a number of conveying means (1, 1').

34. System according to any of claims 25 - 33, **characterized in that** in the system the conveying means (1) is configured to function as a shut-off means in the conveying piping.

35. System according to any of claims 25 - 34, **characterized in that** the movement of the conveying means (1) is slowed down by slowing the movement of the transmission means.

36. System according to any of claims 23 - 35, **characterized in that** a valve means (20), such as a non-return valve, is arranged in the duct (16) of the conveying means (1).

## Patentansprüche

1. Verfahren zum Fördern eines Materials, das sich in der Rohrleitung eines pneumatischen Abfallfördersystems befindet, wobei in dem Verfahren wenigstens ein Fördermittel (1) für Material einem Förderrohr zugeführt wird und eine Druckdifferenz in dem Rohr erzielt wird und unter dem Einfluss der Druckdifferenz das Fördermittel veranlasst wird, sich zur Förderung von Material in dem Förderrohrabschnitt zu bewegen, wobei in dem Verfahren ein Fördermittel (1) oder eine Kombination einer Anzahl von Fördermitteln (1, 1') in der Förderrohrleitung (100, 101) bewegt wird und wobei das Fördermittel (1) oder eine Kombination einer Anzahl von Fördermitteln (1, 1`) mit einem Übertragungsmittel (2) verbunden wird, mit dem die Bewegung des Fördermittels (1) oder einer Kombination einer Anzahl von Fördermitteln (1, 1') in der Förderrohrleitung begrenzt oder geführt wird,
**dadurch gekennzeichnet, dass** ein Kanal (16) in dem Fördermittel (1) durch dieses hindurch von einer Seite zu einer zweiten Seite eingerichtet ist, wobei durch den Kanal Transportluft in der Förderrohrleitung geleitet wird.

2. Verfahren nach Anspruch 1, **dadurch gekennzeichnet,**
**dass** das Übertragungsmittel (2) in einer Bewegungsvorrichtung (3, 4) angeordnet wird, wobei die Bewegungsvorrichtung (3, 4) wenigstens eine Trommel (3) und ihre Antriebsvorrichtung (4) aufweist.

3. Verfahren nach Anspruch 2, **dadurch gekennzeichnet,**
**dass** das Übertragungsmittel (2) ein Übertragungsmittel, wie beispielsweise ein Draht, eine Leitung, ein Kabel oder Entsprechendes, ist, der/die/das auf die Trommel (3) aufgewickelt und von der Trommel (3) abgegeben wird.

4. Verfahren nach einem beliebigen der Ansprüche 1-3, **dadurch gekennzeichnet, dass** die Bewegungsgeschwindigkeit des Fördermittels (1) oder einer Kombination einer Anzahl von Fördermitteln (1, 1`) zum Beispiel mit einer Bremsvorrichtung (5) verlangsamt wird.

5. Verfahren nach einem beliebigen der Ansprüche 1-4,
**dadurch gekennzeichnet, dass** das Fördermittel (1) oder eine Kombination einer Anzahl von Fördermitteln (1, 1') in der Rohrleitung durch Ziehen mit dem Übertragungsmittel (2) mit der Bewegungsvorrichtung (3, 4) alleine oder gemeinsam mit einem Unterdruck und/oder einem Überdruck bewegt wird.

6. Verfahren nach einem beliebigen der Ansprüche 1-5,
**dadurch gekennzeichnet, dass** das Fördermittel (1) oder eine Kombination einer Anzahl von Fördermitteln (1, 1') in der Förderrohrleitung (100, 101) von der Ausgangsposition aus über die gewünschte Strecke in eine erste Richtung und anschließend in eine zweite Richtung zurück zu der Ausgangsposition oder wenigstens in die Richtung der Ausgangsposition bewegt wird.

7. Verfahren nach einem beliebigen der Ansprüche 1-6,
**dadurch gekennzeichnet, dass** die Förderstrecke des Fördermittels (1) in der Förderrohrleitung (100, 101) durch eine Bremsvorrichtung (5), die auf das Übertragungsmittel (2) einwirkt, oder durch Begrenzung des Abwickelns des Übertragungsmittels (2) von der Trommel (3) begrenzt wird.

8. Verfahren nach einem beliebigen der Ansprüche 1-7,
**dadurch gekennzeichnet, dass** die Bewegung des Fördermittels (1) in der Förderrohrleitung durch Einbringen von Ersatzluft in den Rohrabschnitt (101) der Ausgangsposition des Fördermittels, in den Zwischenraum zwischen dessen Stumpfendteil (7) und dem Fördermittel (1), wenn sich das Fördermittel von der Ausgangsposition weg bewegt, oder durch Entfernen von Luft daraus über den geeignetsten Ersatzluftkanal (102), wenn sich das Fördermittel zu der Ausgangsposition hin bewegt, unterstützt wird.

9. Verfahren nach einem beliebigen der Ansprüche 1-8,
**dadurch gekennzeichnet, dass** die Bewegung des Fördermittels (1) durch Einbringen von Luft in den Rohrabschnitt (101) der Ausgangsposition des Fördermittels, in den Zwischenraum zwischen dessen Stumpfendteil (7) und dem Fördermittel (1), durch Verbinden der Druckseite einer Pumpvorrichtung (115) mit diesem oder durch Entfernen von Luft aus dem Zwischenraum zwischen dem Rohrabschnitt (101) der Ausgangsposition, ihrem Stumpfendteil (7) und dem Reinigungsmittel (1) durch Verbinden der Saugseite einer Pumpvorrichtung (115) mit diesem unterstützt wird.

10. Verfahren nach einem beliebigen der Ansprüche 1-9,
**dadurch gekennzeichnet, dass** zusätzlich zu dem Fördermittel (1) eine Reinigungsflüssigkeit (CL) in das Förderrohr eingebracht wird, wobei die Reinigungsflüssigkeit in der Förderrohrleitung gemeinsam mit dem Fördermittel (1) oder den Fördermitteln (1, 1') bewegt wird.

11. Verfahren nach einem beliebigen der Ansprüche 1-10,
**dadurch gekennzeichnet, dass** das bzw. die Fördermittel (1, 1') und die Reinigungsflüssigkeit (CL) in den Zwischenraum (V) zwischen der Innenfläche des Förderrohrs (100, 101) und dem Fördermittel als eine Kombination bewegt werden.

12. Verfahren nach einem beliebigen der Ansprüche 1-11,
**dadurch gekennzeichnet, dass** in dem Verfahren mögliche Rohrverstopfungen ebenfalls mit dem Fördermittel (1) entfernt werden.

13. Verfahren nach einem beliebigen der Ansprüche 1-12,
**dadurch gekennzeichnet, dass** das Fördermittel (1) als ein Verschlussmittel in der Förderrohrleitung verwendet wird.

14. Verfahren nach einem beliebigen der Ansprüche 1-13,
**dadurch gekennzeichnet, dass** ein Teil des zu fördernden Materials von der Frontseite des Fördermittels aus mit dem durch den Kanal (14) strömenden Luftstrom befördert wird und ein Teil des zu fördernden Materials mit dem Fördermittel (1) befördert wird.

15. Fördervorrichtung für das Abfallmaterial eines pneumatischen Abfallfördersystems, wobei die Vorrichtung wenigstens ein Fördermittel (1) aufweist, das in einem Förderrohr anzuordnen ist, wobei das Fördermittel eingerichtet ist, um sich unter dem Einfluss einer Druckdifferenz zu bewegen, um ein Material in einem Rohr in wenigstens eine Richtung in dem zur Reinigung vorgesehenen Förderrohrabschnitt zu fördern, wobei das Fördermittel (1) mit einem Übertragungsmittel (2) verbunden ist, das eingerichtet ist, um die Bewegung des Fördermittels (1) zu begrenzen oder zu führen,
**dadurch gekennzeichnet, dass** ein Kanal (16) in dem Fördermittel (1) durch das Fördermittel (1) hindurch von einer ersten Seite zu einer zweiten Seite derart angeordnet ist, dass das Fördermittel (1) eingerichtet ist, um Ersatzluft in der Förderrohrleitung durch den Kanal (16) des Fördermittels (1) hindurch zu leiten.

16. Vorrichtung nach Anspruch 15, **dadurch gekennzeichnet, dass** das Übertragungsmittel in einer Bewegungsvorrichtung (3, 4) angeordnet ist, wobei die Bewegungsvorrichtung (3, 4) wenigstens eine Trommel (3) und ihre Antriebsvorrichtung (4) aufweist.

17. Vorrichtung nach Anspruch 15, **dadurch gekennzeichnet, dass** das Übertragungsmittel (2) ein Übertragungsmittel, wie beispielsweise ein Draht, eine Leitung, ein Kabel oder Entsprechendes ist, der/die/das auf die Trommel (3) aufzuwickeln und von der Trommel (3) abzugeben ist.

18. Vorrichtung nach einem beliebigen der Ansprüche 15-17, **dadurch gekennzeichnet, dass** die Vorrichtung eine Bremsvorrichtung (5) aufweist.

19. Vorrichtung nach einem beliebigen der Ansprüche 15-18, **dadurch gekennzeichnet, dass** die Vorrichtung einen Ersatzluftkanal (102) aufweist, der mit einem Ventilmittel (104) versehen und an dem Rohrabschnitt (101) der Ausgangsposition des Fördermittels (1) in einem Abschnitt zwischen dessen Stumpfendteil (7) und dem Fördermittel (1) angeordnet ist.

20. Vorrichtung nach einem beliebigen der Ansprüche 15-19, **dadurch gekennzeichnet, dass** die Vorrichtung eine Pumpvorrichtung (115) aufweist, deren Saugseite und/oder Druckseite mit dem Rohrabschnitt (101) der Ausgangsposition des Fördermittels (1) in einem Abschnitt zwischen dessen Stumpfendteil (7) und dem Fördermittel (1) verbunden sein kann.

21. Vorrichtung nach einem beliebigen der Ansprüche 15-20, **dadurch gekennzeichnet, dass** eine Anzahl von Fördermitteln (1, 1') vorhanden ist, die über Koppelmittel (2') miteinander verbunden sind.

22. Vorrichtung nach einem beliebigen der Ansprüche 15-21, **dadurch gekennzeichnet, dass** die Vorrichtung Mittel zur Einbringung einer Reinigungsflüssigkeit (CL) in das Förderrohr, vorzugsweise in eine Verbindung mit dem Fördermittel (1) und/oder einer Anzahl von Fördermitteln (1, 1`), aufweist.

23. Vorrichtung nach einem beliebigen der Ansprüche 15-22, **dadurch gekennzeichnet, dass** das Fördermittel (1) eingerichtet ist, um als ein Verschlussmittel in der Förderrohrleitung zu dienen.

24. Vorrichtung nach einem beliebigen der Ansprüche 15-23, **dadurch gekennzeichnet, dass** ein Ventilmittel (20), beispielsweise ein Rückschlagventil, in dem Kanal (16) des Fördermittels (1) angeordnet ist.

25. Pneumatisches Abfallfördersystem, das eine Förderrohrleitung, Mittel zur Einspeisung des zu fördernden Materials in die Förderrohrleitung sowie Mittel zur Erreichung einer Druckdifferenz in der Förderrohrleitung und eine Trennvorrichtung zur Trennung des Materials von der Transportluft aufweist,
**dadurch gekennzeichnet, dass** das System eine Anzahl von Fördervorrichtungen aufweist, wobei jede der Fördervorrichtungen wenigstens ein Fördermittel (1), das in einem Förderrohr anzuordnen ist, aufweist, wobei das Fördermittel eingerichtet ist, um sich unter dem Einfluss einer Druckdifferenz zu bewegen, um ein Material in einem Rohr in einem zur Reinigung vorgesehenen Förderrohrabschnitt in wenigstens eine Richtung zu fördern, und
dass das Fördermittel (1) mit einem Übertragungsmittel (2) verbunden ist, das eingerichtet ist, um die Bewegung des Fördermittels (1) zu begrenzen oder zu führen, und
dass ein Kanal (16) in dem Fördermittel (1) durch das Fördermittel (1) hindurch von einer ersten Seite zu einer zweiten Seite derart angeordnet ist, dass das Fördermittel (1) eingerichtet ist, um Ersatzluft in der Förderrohrleitung durch den Kanal (16) des Fördermittels (1) hindurch zu leiten, und
dass die Fördermittel (1(I), 1(II), 1(III), 1(IV)) einer Anzahl von Fördervorrichtungen eingerichtet sind, um ein Material, das sich in dem Förderrohrabschnitt angesammelt hat, in einer gewünschten Reihenfolge (I, II, III, IV) vorwärts in der Förderrohrleitung, vorzugsweise zu einer Trennvorrichtung hin, zu leiten.

26. System nach Anspruch 25, **dadurch gekennzeichnet,**
**dass** in dem System die Förderstrecken der Fördermittel (1(I), 1(II), 1(III), 1(IV)) in einer derartigen Weise angeordnet sind, dass die Förderbewegung, d.h. Förderstrecke, der Fördermittel (1(I), 1(II), 1(III) des vorangegangenen Reinigungsabschnitts in der Förderreihenfolge in dem Förderrohr stets etwas in den Rohrabschnitt des Fördermittels der nachfolgenden Fördervorrichtung (1(II), 1(III), 1(IV)) in der Förderreihenfolge, von welchem Rohrabschnitt es das Material vorwärts fördert, hineinragt.

27. System nach Anspruch 25 oder 26, **dadurch gekennzeichnet, dass** ein Übertragungsmittel (2) der Fördervorrichtung in einer Bewegungsvorrichtung (3, 4) angeordnet ist, wobei die Bewegungsvorrichtung (3, 4) wenigstens eine Trommel (3) und ihre Antriebsvorrichtung (4) aufweist.

28. System nach Anspruch 27, **dadurch gekennzeichnet,**
**dass** das Übertragungsmittel (2) der Fördervorrichtung ein Übertragungsmittel, wie beispielsweise ein Draht, eine Leitung, ein Kabel oder Entsprechendes, ist, der/die/das auf die Trommel (3) aufzuwickeln und von der Trommel (3) abzugeben ist.

29. System nach einem beliebigen der Ansprüche 25-28,
**dadurch gekennzeichnet, dass** in dem System das Fördermittel (1) in die Rückrichtung in der Rohrleitung durch Ziehen mit dem Übertragungsmittel (2) mit der Bewegungsvorrichtung (3, 4) alleine oder gemeinsam mit einem Unterdruck und/oder einem Überdruck bewegt wird.

30. System nach einem beliebigen der Ansprüche 25-29,
**dadurch gekennzeichnet, dass** die Fördervorrichtung einen Ersatzluftkanal (102) aufweist, der mit einem Ventilmittel (104) versehen und an dem Rohrabschnitt (101) der Ausgangsposition des Fördermittels (1) in einem Abschnitt zwischen dessen Stumpfendteil (7) und dem Fördermittel (1) angeordnet ist.

31. System nach einem beliebigen der Ansprüche 25-30,
**dadurch gekennzeichnet, dass** die Fördervorrichtung eine Pumpvorrichtung (115) aufweist, deren Saugseite und/oder Druckseite mit dem Rohrabschnitt (101) der Ausgangsposition des Fördermittels (1) in einem Abschnitt zwischen dessen Stumpfendteil (7) und dem Fördermittel (1) verbunden sein kann.

32. System nach einem beliebigen der Ansprüche 25-31,
**dadurch gekennzeichnet, dass** eine Anzahl von Fördermitteln (1, 1') vorhanden ist, die über Koppelmittel (2') miteinander verbunden sind.

33. System nach einem beliebigen der Ansprüche 25-32,
**dadurch gekennzeichnet, dass** die Fördervorrichtung Mittel zur Einbringung einer Reinigungsflüssigkeit (CL) in das Förderrohr, vorzugsweise in eine Verbindung mit dem Fördermittel (1) oder einer Anzahl von Fördermitteln (1, 1`), aufweist.

34. System nach einem beliebigen der Ansprüche 25-33,
**dadurch gekennzeichnet, dass** in dem System das Fördermittel (1) eingerichtet ist, um als ein Verschlussmittel in der Förderrohrleitung zu funktionieren.

35. System nach einem beliebigen der Ansprüche 25-34,
**dadurch gekennzeichnet, dass** die Bewegung des Fördermittels (1) durch eine Verlangsamung der Bewegung des Übertragungsmittels verlangsamt wird.

36. System nach einem beliebigen der Ansprüche 23-35,
**dadurch gekennzeichnet, dass** ein Ventilmittel (20), beispielsweise ein Rückschlagventil, in dem Kanal (16) des Fördermittels (1) angeordnet ist.

## Revendications

1. Procédé d'acheminement de matériau qui est dans la tuyauterie d'un système d'acheminement de déchets pneumatique, dans lequel procédé au moins un moyen d'acheminement (1) de matériau est introduit dans un tuyau d'acheminement, et une différence de pression est obtenue dans le tuyau et sous l'influence de la différence de pression le moyen d'acheminement est amené à se déplacer pour acheminer le matériau dans la section de tuyau d'acheminement, dans lequel
dans le procédé un moyen d'acheminement (1) ou une combinaison d'un certain nombre de moyens d'acheminement (1, 1') est déplacé dans la tuyauterie d'acheminement (100, 101) et en ce que le moyen d'acheminement (1) ou la combinaison d'un certain nombre de moyens d'acheminement (1, 1') est relié à un moyen de transmission (2), avec lequel le mouvement du moyen d'acheminement (1) ou de la combinaison d'un certain nombre de moyens d'acheminement (1, 1') dans la tuyauterie d'acheminement est limité ou guidé, **caractérisé en ce qu'**un conduit (16) est agencé dans le moyen d'acheminement (1) à travers lui d'un premier côté vers un second côté, à travers lequel conduit l'air transporteur est conduit dans la tuyauterie d'acheminement.

2. Procédé selon la revendication 1, **caractérisé en ce que** le moyen de transmission (2) est agencé dans un dispositif mobile (3, 4), lequel dispositif mobile (3, 4) comprend au moins une poulie (3) et son dispositif d'entraînement (4).

3. Procédé selon la revendication 2, **caractérisé en ce que** le moyen de transmission (2) est un moyen de transmission, comme un fil, une ligne un câble ou un autre élément correspondant destiné à être enroulé sur la poulie (3) et déroulé de la poulie (3).

4. Procédé selon l'une quelconque des revendications 1-3,
**caractérisé en ce que** la vitesse de déplacement du moyen d'acheminement (1) ou de la combinaison d'un certain nombre de moyens d'acheminement (1, 1') est ralentie, par exemple par un dispositif de frein (5).

5. Procédé selon l'une quelconque des revendications 1-4,
**caractérisé en ce que** le moyen d'acheminement (1) ou une combinaison d'un certain nombre de moyens d'acheminement (1, 1') est déplacé dans la tuyauterie en tirant avec le moyen de transmission (2) avec le dispositif mobile (3, 4) seul ou conjointement avec la pression négative et/ou la pression positive.

6. Procédé selon l'une quelconque des revendications 1-5,
**caractérisé en ce que** le moyen d'acheminement (1) ou une combinaison d'un certain nombre de moyens d'acheminement (1, 1') est déplacé dans la tuyauterie d'acheminement (100, 101) depuis la position de départ de la distance souhaitée dans une première direction et ensuite dans une seconde direction pour revenir dans la position de départ ou au moins dans la direction de la position de départ.

7. Procédé selon l'une quelconque des revendications 1-6, **caractérisé en ce que** la distance d'acheminement du moyen d'acheminement (1) dans la tuyauterie d'acheminement (100, 101) est limitée par un dispositif de frein (5) agissant sur le moyen de transmission (2) ou en limitant le déroulement du moyen de transmission (2) depuis la poulie (3).

8. Procédé selon l'une quelconque des revendications 1-7,
**caractérisé en ce que** le déplacement du moyen d'acheminement (1) dans la tuyauterie d'acheminement est facilité en agençant de l'air de remplacement dans la section de tuyau (101) de la position de départ du moyen d'acheminement, dans l'espace entre sa partie d'extrémité de bout (7) et le moyen d'acheminement (1), quand le moyen d'acheminement s'éloigne de la position de départ, ou en en enlevant l'air quand le moyen d'acheminement se déplace vers la position de départ, via le conduit d'air de remplacement (102) le plus convenable.

9. Procédé selon l'une quelconque des revendications 1-8,
**caractérisé en ce que** le déplacement du moyen d'acheminement (1) est facilité en amenant de l'air dans la section de tuyau (101) de la position de départ du moyen d'acheminement, dans l'espace entre sa partie d'extrémité de bout (7) et le moyen d'acheminement (1), en lui reliant le côté soufflant d'un dispositif de pompe (115), ou en enlevant de l'air de l'espace entre la section de tuyau (101) de la position de départ, sa partie d'extrémité de bout (7), et les moyens de nettoyage (1) en lui reliant le côté d'aspiration d'un dispositif de pompe (15).

10. Procédé selon l'une quelconque des revendications 1-9,
**caractérisé en ce qu'**un liquide de nettoyage (CL), en plus du moyen d'acheminement (1), est amené dans le tuyau d'acheminement, lequel liquide de nettoyage est déplacé dans la tuyauterie d'acheminement conjointement avec le moyen d'acheminement (1) ou les moyen d'acheminement (1, 1').

11. Procédé selon l'une quelconque des revendications 1-10, **caractérisé en ce que** les moyens d'acheminement (1, 1') et le liquide de nettoyage (CL) amenés dans l'espace (V) entre la surface intérieure du tuyau d'acheminement (100, 101) et le moyen d'acheminement sont déplacés comme une combinaison.

12. Procédé selon l'une quelconque des revendications 1-11,
**caractérisé en ce que** dans le procédé des blocages de tuyau possibles sont aussi enlevés avec le moyen d'acheminement (1).

13. Procédé selon l'une quelconque des revendications 1-12,
**caractérisé en ce que** le moyen d'acheminement (1) est utilisé come un moyen de fermeture dans la tuyauterie d'acheminement.

14. Procédé selon l'une quelconque des revendications 1-13,
**caractérisé en ce qu'**une partie du matériau à acheminer est acheminée depuis devant le moyen d'acheminement avec le courant d'air avançant à travers le conduit (14) et une partie du matériau à acheminer est acheminée avec les moyens d'acheminement (1).

15. Dispositif d'acheminement pour le matériau de déchet d'un système d'acheminement de déchets pneumatique, lequel dispositif comprend au moins un moyen d'acheminement (1) destiné à être agencé dans un tuyau d'acheminement, lequel moyen d'acheminement est configuré pour se déplacer sous l'influence d'une différence de pression pour acheminer un matériau dans un tuyau dans au moins une direction dans la section de tuyau d'acheminement destinée à être nettoyée,
dans lequel le moyen d'acheminement (1) est relié à un moyen de transmission (2), qui est configuré pour limiter ou guider le déplacement du moyen d'acheminement (1), **caractérisé en ce qu'**un conduit (16) est agencé dans le moyen d'acheminement (1) à travers le moyen d'acheminement (1) depuis un premier côté vers un second côté de telle manière que le moyen d'acheminement (1) est adapté pour conduire de l'air de remplacement dans la tuyauterie d'acheminement à travers le conduit (16) du moyen d'acheminement (1).

16. Dispositif selon la revendication 15, **caractérisé en ce que** le moyen de transmission est agencé dans un dispositif mobile (3, 4), lequel dispositif mobile (3, 4) comprend au moins une poulie (3) et son dispositif d'entraînement (4).

17. Dispositif selon la revendication 16, **caractérisé en ce que** le moyen de transmission (2) est un moyen de transmission, comme un fil, une ligne, un câble ou un autre élément correspondant destiné à être enroulé sur la poulie (3) et déroulé de la poulie (3).

18. Dispositif selon l'une quelconque des revendications 15-17, **caractérisé en ce que** le dispositif comprend un dispositif de frein (5).

19. Dispositif selon l'une quelconque des revendications 15-18,
**caractérisé en ce que** le dispositif comprend un conduit d'air de remplacement (102), qui est pourvu d'un moyen formant vanne (104), et agencé sur la section de tuyau (101) de la position de départ du moyen d'acheminement (1), dans une section entre sa partie d'extrémité de bout (7) et le moyen d'acheminement (1).

20. Dispositif selon l'une quelconque des revendications 15-19,
**caractérisé en ce que** le dispositif comprend un dispositif de pompe (115), dont le côté d'aspiration et/ou le côté soufflant peuvent être reliés à la section de tuyau (101) de la position de départ du moyen d'acheminement (1), dans une section entre sa partie d'extrémité de bout (7) et le moyen d'acheminement (1).

21. Dispositif selon l'une quelconque des revendications 15-20,
**caractérisé en ce qu'**il y a un certain nombre de moyens d'acheminement (1, 1'), qui sont reliés ensemble avec un moyen de couplage (2').

22. Dispositif selon l'une quelconque des revendications 15-21,
**caractérisé en ce que** le dispositif comprend un moyen pour amener le liquide de nettoyage (CL) dans le tuyau d'acheminement, de préférence en liaison avec le moyen d'acheminement (1) et/ou un certain nombre de moyens d'acheminement (1, 1').

23. Dispositif selon l'une quelconque des revendications 15-22,
**caractérisé en ce que** le moyen d'acheminement (1) est configuré pour fonctionner comme un moyen de fermeture dans la tuyauterie d'acheminement.

24. Dispositif selon l'une quelconque des revendications 15-23,
**caractérisé en ce qu'**un moyen formant vanne (20), comme un clapet anti-retour, est agencé dans le conduit (16) du moyen d'acheminement (1).

25. Système d'acheminement de déchets pneumatique, qui comprend une tuyauterie d'acheminement, un moyen pour alimenter le matériau à acheminer dans la tuyauterie d'acheminement, ainsi qu'un moyen pour obtenir une différence de pression dans la tuyauterie d'acheminement et un dispositif de séparation pour séparer le matériau de l'air de transport,
**caractérisé en ce que** le système comprend un certain nombre de dispositifs d'acheminement, chacun desquels dispositifs d'acheminement comprend au moins un moyen d'acheminement (1) destiné à être agencé dans un tuyau d'acheminement, lequel moyen d'acheminement est configuré pour se déplacer sous l'influence d'une différence de pression pour acheminer un matériau dans un tuyau dans une section de tuyau d'acheminement destinée à être nettoyée, dans au moins une direction, et **en ce que**
le moyen d'acheminement (1) est relié à un moyen de transmission (2), qui est configuré pour limiter ou guider le mouvement du moyen d'acheminement (1), et **en ce qu'**un conduit (16) est agencé dans le moyen d'acheminement (1) à travers le moyen d'acheminement (1) depuis un premier côté vers un second côté, de telle manière que le moyen d'acheminement (1) est adapté pour conduire de l'air de remplacement dans la tuyauterie d'acheminement à travers le conduit (16) du moyen d'acheminement (1), et **en ce que** le moyen d'acheminement (1(I), 1(II), 1(III), 1(IV)) d'un certain nombre de dispositifs d'acheminement sont configurés pour acheminer dans une séquence souhaitée (I, II, III, IV) un matériau qui a été collecté dans la section de tuyau d'acheminement vers la tuyauterie d'acheminement, de préférence vers un dispositif de séparation.

26. Système selon la revendication 25, **caractérisé en ce que**
dans le système les distances d'acheminement des moyens d'acheminement (1(I), 1(II), 1(III), 1(IV)) sont agencées de telle manière que le mouvement d'acheminement, c'est à dire la distance d'acheminement, des moyens d'acheminement (1(I), 1(II), 1(III)) de la section de nettoyage précédente dans la séquence d'acheminement, s'étend toujours dans le tuyau d'acheminement légèrement dans la section de tuyau du moyen d'acheminement du dispositif d'acheminement suivant (1(II), 1(III), 1(IV)) dans la séquence d'acheminement, depuis la section de tuyau sur laquelle il achemine le matériau.

27. Système selon la revendication 25 ou 26, **caractérisé en ce qu'**un moyen de transmission (2) du dispositif d'acheminement est agencé dans un dispositif mobile (3, 4), lequel dispositif mobile (3, 4) comprend au moins une poulie (3) et son dispositif d'entraînement (4).

28. Système selon la revendication 27, **caractérisé en ce que** le moyen de transmission (2) du dispositif d'acheminement est un moyen de transmission, comme un fil, une ligne, un câble ou un autre élément correspondant destiné à être enroulé sur la poulie (3) et déroulé de la poulie (3).

29. Système selon l'une quelconque des revendications 25-28,
**caractérisé en ce que** dans le système le moyen d'acheminement (1) est déplacé dans la direction de retour dans la tuyauterie en tirant avec le moyen de transmission (2) avec le dispositif mobile (3, 4) seul ou conjointement avec la pression négative et/ou la pression positive.

30. Système selon l'une quelconque des revendications 25-29,
**caractérisé en ce que** le dispositif d'acheminement comprend un conduit d'air de remplacement (102), qui est pourvu d'un moyen formant vanne (104), et agencé sur la section de tuyau (101) de la position de départ du moyen d'acheminement (1), dans une section entre sa partie d'extrémité de bout (7) et le moyen d'acheminement (1).

31. Système selon l'une quelconque des revendications 25-30,
**caractérisé en ce que** le dispositif d'acheminement comprend un dispositif de pompe (115), dont le côté d'aspiration et/ou le côté soufflant peuvent être reliés à la section de tuyau (101) de la position de départ du moyen d'acheminement (1), dans une section entre sa partie d'extrémité de bout (7) et le moyen d'acheminement (1).

32. Système selon l'une quelconque des revendications 25-31,
**caractérisé en ce qu'**il y a un certain nombre de moyens d'acheminement (1, 1'), qui sont reliés ensemble avec un moyen de couplage (2').

33. Système selon l'une quelconque des revendications 25-32,
**caractérisé en ce que** le dispositif d'acheminement comprend un moyen pour amener le liquide de nettoyage (CL) dans le tuyau d'acheminement, de préférence en connexion avec le moyen d'acheminement (1) ou un certain nombre de moyens d'acheminement (1, 1').

34. Système selon l'une quelconque des revendications 25-33,
**caractérisé en ce que** dans le système le moyen d'acheminement (1) est configuré pour fonctionner comme un moyen de fermeture dans la tuyauterie d'acheminement.

35. Système selon l'une quelconque des revendications 25-34, **caractérisé en ce que** le mouvement du moyen d'acheminement (1) est ralenti en ralentissant le mouvement du moyen de transmission.

36. Système selon l'une quelconque des revendications 23-35,
**caractérisé en ce qu'**un moyen formant vanne (20), comme un clapet anti-retour, est agencé dans le conduit (16) du moyens d'acheminement (1).
